# EUROPÄISCHE PATENTSCHRIFT

(11) **EP 3 388 399 B1**
(45) Veröffentlichungstag und Bekanntmachung des Hinweises auf die Patenterteilung: **13.05.2020**
(21) Anmeldenummer: 18166736.1
(22) Anmeldetag: 11.04.2018
(51) Int. Cl.: C03B 35/06, B65G 49/05, C03B 35/10

(54) **VORRICHTUNG ZUM POSITIONSGETREUEN TRANSPORT VON EMPFINDLICHEN FILIGRANEN HEISSEN GLASWAREN ZU EINEM ENTSPANNUNGSOFEN HIN UND/ODER VON DIESEM WEG**
DEVICE FOR PRECISE TRANSPORT OF SENSITIVE FILIGRANE HOT GLASSWARE TO A STRESS RELIEVING FURNACE AND/OR AWAY FROM THE FURNACE
DISPOSITIF DE TRANSPORT DE MANIÈRE FIDÈLE À LA POSITION DE LA VERROTERIE CHAUDE, FILIGRANÉE, FRAGILE JUSQU'À UN FOUR À DÉTENTE ET/OU À L'ÈCART DE CE FOUR

(30) Priorität: 13.04.2017 DE 102017107988
(43) Veröffentlichungstag der Anmeldung: 17.10.2018
(73) Patentinhaber: Ernst Pennekamp GmbH & Co. OHG, 58256 Ennepetal (DE)
(72) Erfinder: HOFF, Klaus-Uwe, 42499 Hückeswagen (DE); ZUPP, Udo, 42119 Wuppertal (DE)
(74) Vertreter: Buse, Mentzel, Ludewig Patentanwaltskanzlei

(56) Entgegenhaltungen:
- US-A- 2 077 830
- US-A- 2 229 348
- US-A- 4 193 784
- US-A- 4 923 363

## Beschreibung

Die Erfindung betrifft eine Vorrichtung zum positionsgetreuen Transport von empfindlichen filigranen heißen Glaswaren gemäß dem Oberbegriff von Patentanspruch 1. Unter empfindlichen Glaswaren werden insbesondere Glasartikel aus Röhrenglas, wie Phiolen, Spritzen, Karpulen und Ähnliches verstanden, welche beispielsweise im Bereich der Medizin und Pharmazie eingesetzt werden. Pharmazeutisches Glas ist sehr filigran und mit geringen Wandstärken ausgeführt und daher sehr empfindlich. Wechselnde Berührungen sind dabei zu minimieren, um Vorschädigungen des Glases zu vermeiden. Daher werden an die Qualität und Rückverfolgbarkeit dieser Glaswaren höchste Anforderungen gestellt. Beschädigungen der Glaskörper können die in sie eingebrachten Medikamente verunreinigen und damit unbrauchbar machen bzw. durch Vorschädigungen des Glases können die Waren beim Befüllen, Verpacken oder dem Transport zu Bruch gehen, wobei die in den Glaswaren enthaltenen - im Vergleich zu Verpackung - teuren Medikamente verloren gehen. Die Glaswaren werden zunächst geformt und dann auf ein Transportband verbracht. Damit beim Abkühlen der Glaswaren keine Spannungen im Glas entstehen, werden die Glaswaren in einem Entspannungsofen gezielt einem Temperaturprofil ausgesetzt.

Bei herkömmlichen Vorrichtungen dieser Art ist es üblich, dass die Glaswaren einzeln hintereinander auf einem Transportband aus dem Formprozess verbracht werden, um dann in einen Entspannungsofen gebracht zu werden, bei dem die Geschwindigkeit des Transportsystems deutlich langsamer verläuft als die des Transportbandes. Es werden dabei immer mehrere Glaswaren gleichzeitig in einer Spalte auf dem Transportsystem des Entspannungsofens abgelegt. Mehrere Spalten werden dann nebeneinander angeordnet und gemeinsam durch den Entspannungsofen hindurchgeführt. Auch am Ende des Entspannungsofens werden die Glaswaren dann wieder spaltenweise entnommen und auf einem weiteren Transportband hintereinander angeordnet, von wo aus eine weitere Verarbeitung oder Ähnliches erfolgen kann.

Auch dieses Transportband bewegt sich wieder in eine Richtung, die parallel zum Transportsystem des Entspannungsofens angeordnet ist und die einzelnen Spalten von Glaswaren werden hintereinander angeordnet.

Durch die Ablage und Aufnahme der Glaswaren in solche Spalten müssen die Ablage- und Aufnahmesysteme, welche die Glaswaren vom Transportband auf das Transportsystem und vom Transportsystem wieder auf ein Transportband bringen, relativ große Wegstrecken zurücklegen. Um den Anforderungen an größere Produktionsmengen gerecht zu werden, werden die Entspannungsöfen häufig immer breiter, so dass sich diese Wegstrecken ebenfalls weiter vergrößern. Um die Wegstrecken dennoch in einer angemessenen Zeit zurückzulegen, müssen die Ablage- und Aufnahmesysteme, welche die Glaswaren vom Transportband auf das Transportsystem oder vom Transportsystem auf das Transportband befördern, sich immer schneller bewegen, wodurch diese Systeme steile Anfahr- und Bremsrampen vollführen und den gesamten Entspannungsofen bzw. dessen Transportsystem dadurch zum Schwingen anregen. Dies führt jedoch dazu, dass die Glaswaren, welche auf dem Transportsystem des Entspannungsofens platziert sind, ebenfalls in Schwingung geraten und dadurch ihre Position verlieren bzw. beschädigt werden. Dann ist jedoch die Aufnahme der Glaswaren am Ende des Entspannungsofens nicht mehr fehlerfrei möglich und eine lückenlose Rückverfolgbarkeit der einzelnen Glaswaren ebenfalls schwierig. Alternativ könnte man auch die Ablage- und Aufnahmetische und die zugehörigen Ablage- und Aufnahmesysteme verlängern, um pro Spalte mehr Glaswaren zu transportieren. Jedoch werden auch die Ablage- und Aufnahmesysteme aufgrund einer erhöhten Länge und den immer noch recht hohen Geschwindigkeiten zum Schwingen angeregt, was wieder zu den bereits erwähnten Problemen führt.

Ein weiteres Problem ist, dass das Transportsystem des Entspannungsofens durch die thermische Belastung während der Ofendurchfahrt expandiert. Hierdurch können sich die Abstände der einzelnen Glaswaren zueinander verändern. Insbesondere in Laufrichtung des Transportsystems durch den Entspannungsofen ist dieser Einfluss spürbar, da die Glaswaren spaltenweise und damit quer zur Laufrichtung platziert werden. Dies kann dazu führen, dass die Abstände des Aufnahmesystems nicht mit den durch die thermische Expansion resultierenden Abständen der Glaswaren korrespondieren, so dass die entsprechenden Glaswaren nicht positionsgenau am Ende des Entspannungsofens abgenommen werden können.

Insbesondere am Anfang des Entspannungsofens ist zusätzlich auch noch der Übergang vom heißen Ofentunnel, in dem der Formprozess der Glaswaren stattfindet, spürbar. Hierbei wird das Transportsystem auch großen Temperaturunterschieden ausgesetzt und zwar vom Anfang des Entspannungsofens hin zum Ende des Entspannungsofens. Durch die relativ großen Temperaturunterschiede kann sich das Transportsystem noch zusätzlich temporär verbiegen, was das korrekte Aufnehmen der Glaswaren zusätzlich erschwert.

In dem Dokument US 2,229,348 wird eine Vorrichtung zum stehenden Transport von Flaschen in einen Entspannungsofen beschrieben. Diese Vorrichtung entspricht jedoch nicht den extrem hohen Anforderungen für empfindliche pharmazeutische Gläser, da es bei dieser Vorrichtung ständig zu Reibung zwischen den Böden der Flaschen und dem Transportband kommt und darüber hinaus die Finger, die die Glaswaren manipulieren, dauerhaft die Korpusse der Flaschen berühren. Bei filigranen Glasartikeln, die eine geringe Wandstärke aufweisen, ist dieses jedoch zu vermeiden, da die Glaswaren hierdurch beschädigt werden können.

In der US 5,191,963 ist eine Maschine beschrieben, die Verschiedene Waren gruppiert, insbesondere Kartonagen. Hier sind für die einzelnen Waren auch Sitze beschrieben, auf die die Waren aufgebracht werden können. Allerdings sind die Sitze nicht dafür ausgelegt, einen möglichst geringen Kontaktbereich zu den Waren aufzuweisen, da dies für Kartonagen und ähnliche Waren auch nicht notwendig ist. Auch ist diese Vorrichtung weder für die hohen Temperaturen und die damit verbundenen Probleme in der Glasindustrie ausgelegt noch für die Behandlung besonders empfindlicher Waren.

Auch die Dokumente US 1,979,763 und DE 2 310 094 beschreiben Vorrichtungen zum Transport von Glasflaschen. Auch hier werden die Flaschen stehend transportiert und sind im Bereich des Korpus bzw. des Halses ständig mit einem Element der Transportvorrichtung in Kontakt. Bei der US 1,979,763 werden die Flaschenhälse zwischen zwei Flanken eingeklemmt, wobei hohe Reibungen durch auf die Flaschen übertragene Vibrationen entstehen können, bei der DE 2 310 094 werden die einzelnen Flaschen großflächig von einem Vakuumgreifer gegriffen, wodurch kleine und filigrane Glaswaren mit geringer Wandstärke beschädigt werden können.

Aufgabe der Erfindung ist es daher, die vorerwähnten Nachteile zu vermeiden und eine Vorrichtung zu schaffen, mit welcher filigrane und empfindliche Glaswaren einfacher und positionsgetreuer in einen Entspannungsofen hinein und aus diesem heraustransportiert werden können, auch bei relativ großen Stückzahlen. Diese Aufgaben werden durch die kennzeichnenden Merkmale von Anspruch 1 gelöst, denen folgende besondere Bedeutung zukommt.

Die empfindlichen filigranen Glaswaren werden liegend transportiert. Das wenigstens eine Transportband verläuft zumindest bereichsweise quer zur Laufrichtung des Transportsystems des Entspannungsofens. Durch das Ablagesystem sind mehrere Glaswaren in wenigstens einer Beladereihe, die sich senkrecht zur Laufrichtung des Transportsystems erstreckt, auf das Transportsystem am Anfang des Entspannungsofens ablegbar und/oder durch das Aufnahmesystem sind mehrere Glaswaren in wenigstens einer Beladereihe, die sich senkrecht zur Laufrichtung des Transportsystems erstreckt, am Ende des Entspannungsofens von diesem aufnehmbar. Diese Beladereihe verläuft quasi senkrecht zu den im Stand der Technik üblichen und bereits erwähnten Spalten. Dadurch, dass das wenigstens eine Transportband quer, also senkrecht zur Laufrichtung des Transportsystems des Entspannungsofens in der Nähe des Entspannungsofens verläuft, können mehrere Glaswaren gleichzeitig in Reihen auf dem Transportsystem des Entspannungsofens angeordnet oder von diesem wieder entnommen werden. Hierdurch sind sehr kurze Fahrwege für das Ablage- und Aufnahmesystem notwendig, die Glaswaren müssen nicht verschwenkt sondern nur angehoben und wieder abgesetzt werden und auch bei einem breiteren Entspannungsofen mit relativ vielen Glaswaren in einer Reihe verlängern sich die Fahrwege nicht. Somit werden die Schwingungen, denen das System durch steile Beschleunigungs- und Bremsrampen ausgesetzt würde, minimiert, da bei diesen kurzen Wegstrecken keine großen Geschwindigkeiten erreicht werden müssen und somit auch keine steilen Beschleunigungs- und Bremsrampen durchlaufen werden müssen. Der Abstand der Glaswaren auf Transportband ist identisch zu dem des durch den Entspannungsofen führenden Transportsystems, um eine positionsgetreue Übergabe der Glaswaren zu gewährleisten.

Das Transportsystem besteht vorzugsweise aus einem umlaufenden Band mit wenigstens zwei Umlenkrollen, wobei die Beladereihe am Anfang des Entspannungsofens auf Höhe der Mitte der vorderen Umlenkrolle ablegbar und/oder am Ende des Entspannungsofens auf Höhe der Mitte der hinteren Umlenkrolle aufnehmbar ist. Somit ist ein gleichmäßiger und möglichst schwingungsarmer Transport der Glaswaren durch den Entspannungsofen möglich. Darüber hinaus wird der zur Verfügung stehende Platz des Transportsystems möglichst gut ausgenutzt.

In einem weiteren bevorzugten Ausführungsbeispiel sind mehrere Beladereihen von Glaswaren gleichzeitig ablegbar und/oder aufnehmbar. Hiermit kann der Durchsatz durch den Entspannungsofen noch zusätzlich erhöht werden. Wie viele Glaswaren gleichzeitig abgelegt bzw. aufgenommen werden, ist vom jeweiligen Anwendungsfall abhängig.

Bevorzugterweise ist das wenigstens eine Transportband als umlaufendes Kettenförderband ausgebildet. Diese sind robust in der Anwendung und können auch höheren Temperaturen ohne Probleme standhalten. Ein weiterer Vorteil besteht darin, dass eventuelle nicht manipulierte Glaswaren auf dem umlaufenden Transportband weiterhin befördert werden und dadurch nicht verloren gehen, sondern beim nächsten Umlauf auf das Transportsystem verbracht werden können.

Durch das wenigstens eine Transportband kann die Transportrichtung der Glaswaren um 90 Grad verändert werden. Somit kann der Formprozess wie gewohnt stattfinden und die Glaswaren auf das entsprechende Transportband verbracht werden. Das Transportband ändert dann die Bewegungsrichtung der Glaswaren automatisch, um sie nicht parallel zur Laufrichtung des Transportsystems des Entspannungsofens dem Entspannungsofen zuzuführen, sondern senkrecht zu dieser Laufrichtung, so dass die Glaswaren in den gewünschten Beladereihen abgelegt werden können, anstelle der herkömmlichen Spalten, wie sie bei bisherigen Vorrichtungen aus dem Stand der Technik vorgesehen sind. Durch diese Änderung der Transportrichtung der Glaswaren ist auch eine Nach- bzw. Umrüstung bestehender Anlagen recht einfach möglich.

Bevorzugterweise weist das wenigstens eine Transportband noch ein oder mehrere Tragelemente zur Aufnahme der Glaswaren auf. Somit können die Glaswaren besonders präzise auf dem Transportband platziert und von diesem wieder entnommen werden. Des Weiteren verhindern die Tragelemente, dass die Glaswaren zur sehr mit dem Transportband in Kontakt kommen und dadurch ggf. geschädigt werden. Jedes Glaselement erhält quasi einen festen Platz auf dem Tragelement und damit auf dem Transportband. Die Tragelemente sind dabei so beschaffen, dass eine minimale Kontaktfläche zwischen Tragelement und Glasware entsteht, um Beschädigungen an den empfindlichen Glaswaren zu minimieren.

Bevorzugterweise sind die Tragelemente am Transportband lösbar befestigbar und dadurch austauschbar und ggf. noch in unterschiedlichen Positionen bzw. Abständen positionierbar. So kann das Transportband einfach und unkompliziert auf verschiedene Größen und Formen von Glaswaren umgerüstet werden und ggf. defekte Tagelemente können einfach ausgetauscht werden, ohne direkt das komplette Transportband austauschen zu müssen. Die Stillstandzeiten des Transportbandes für eine derartige Umrüstung minimieren sich dadurch beträchtlich.

Das Aufnahmesystem und/oder das Ablagesystem können über mehrere voneinander unabhängige Verfahrachsen und damit viele Freiheitsgrade verfügen, um eine besonders gute, gezielte und präzise Ablage bzw. Aufnahme der Glaswaren auf dem bzw. von dem Transportsystem des Entspannungsofens durchführen zu können. Um die Glaswaren auf dem Transportsystem des Entspannungsofens abzulegen bzw. von diesem aufzunehmen, finden Vakuumgreifer Verwendung Beide Systeme können die noch heißen Glaswaren beschädigungsfrei auf dem Transportsystem ablegen bzw. von diesem aufnehmen und einem Transportband zuführen. Selbstverständlich können die Ablage- und Aufnahmesysteme auch anders ausgeführt sein.

Weitere Vorteile und Ausführungsbeispiele ergeben sich aus der nachfolgenden Beschreibung, den Unteransprüchen sowie den Zeichnungen. In den Zeichnungen ist die Erfindung einmal schematisch und ansonsten in einem Ausführungsbeispiel dargestellt. Es zeigen:
- Fig. 1:: eine schematische Skizze der erfindungsgemäßen Vorrichtung,
- Fig. 2:: der Ablagebereich einer erfindungsgemäßen Vorrichtung in Draufsicht,
- Fig. 3:: der Ablagebereich perspektivisch,
- Fig. 4:: ein erfindungsgemäßes Transportband, perspektivisch,
- Fig. 5:: das Transportband aus Fig. 4 in Seitenansicht,
- Fig. 6:: einen Ausschnitt aus dem Transportband aus Fig. 4 und 5, perspektivisch,
- Fig. 7:: der Ausschnitt aus Fig. 6 in Draufsicht.

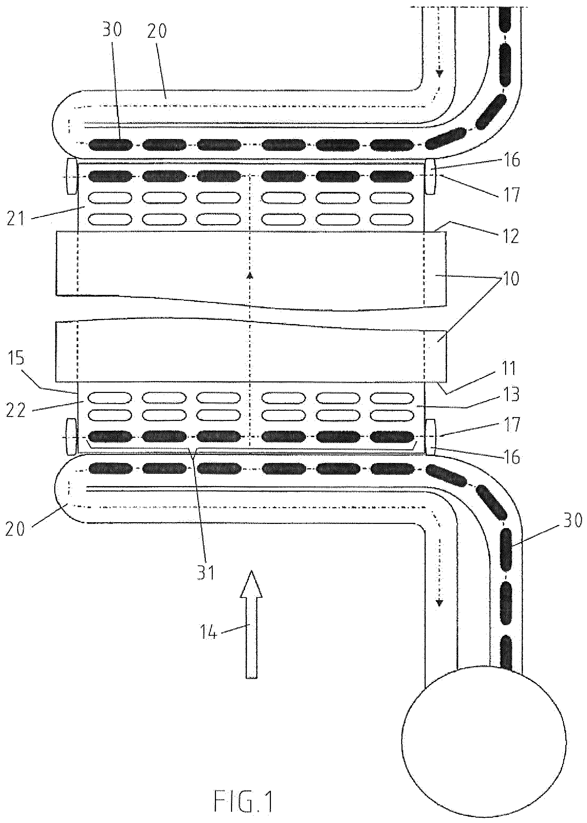

Fig. 1 zeigt eine schematische Skizze des Entspannungsofens 10 mit zwei Transportbändern 20. Das in Laufrichtung 14 erste Transportband 20 bringt die heißen Glaswaren 30 aus dem hier nicht näher dargestellten Formprozess zum Anfang 11 des Entspannungsofens 10 heran. Hierbei vollführt das Transportband 20 eine 90°-Kurve, so dass die Glaswaren 30 in einer Richtung, die senkrecht zur Laufrichtung 14 des Transportsystems 13 des Entspannungsofens 10 verläuft, am Transportsystem 13 ankommen. Die heißen Glaswaren 30 werden dann mittels des hier nicht näher gezeigten Ablagesystems auf dem Ablagetisch 22 platziert und zwar jeweils in einer Beladereihe 31. Das Transportsystem 13 ist hier als umlaufendes Band 15 ausgeführt und die Ablage, erfolgt in der Mitte 17 der vorderen Umlenkrolle 16. Gleiches gilt auch für den Aufnahmetisch 21, der am Ende 12 des Entspannungsofens 10 angeordnet ist. Auch hier wird eine Beladereihe 31 von einem hier nicht näher dargestellten Aufnahmesystem aufgenommen und auf das Transportband 20 verbracht. Die Aufnahme der Beladereihe 31 erfolgt wieder in der Mitte 17 der Umlenkrolle 16, hier der hinteren Umlenkrolle 16. Auch hier vollführt das Transportband 20 eine 90° -Kurve, so dass die Glaswaren 30 wieder in den weiteren Prozess in gewohnter Richtung eingeführt werden können.

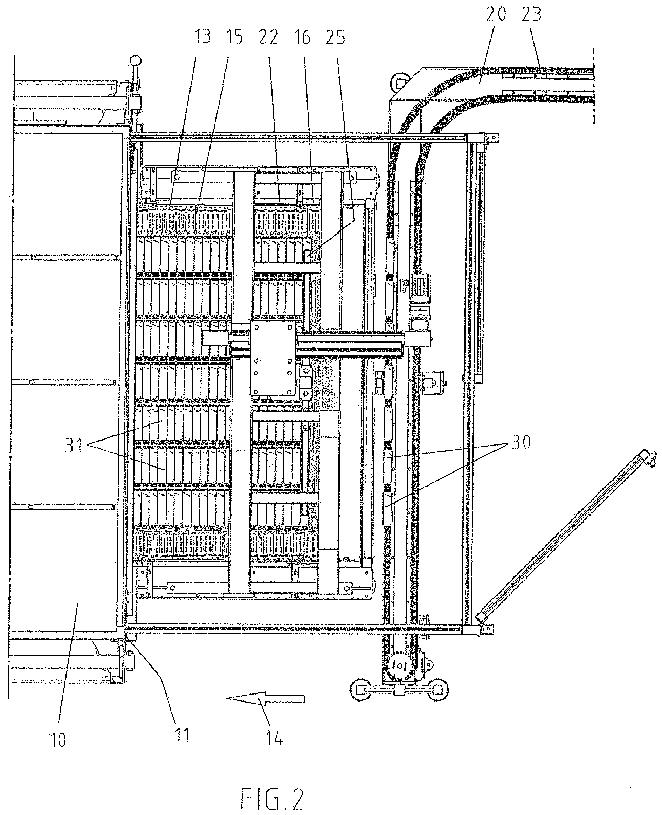

In den Fig. 2 bis 7 ist nur der Anfang 11 des Entspannungsofens 10 mit dem Ablagetisch 22 dargestellt. Die gleichen Bauteile und Einrichtungen können selbstverständlich auch in identischer Weise am Ende 12 des Entspannungsofens 10 mit dem Aufnahmetisch 21 vorgesehen sein.

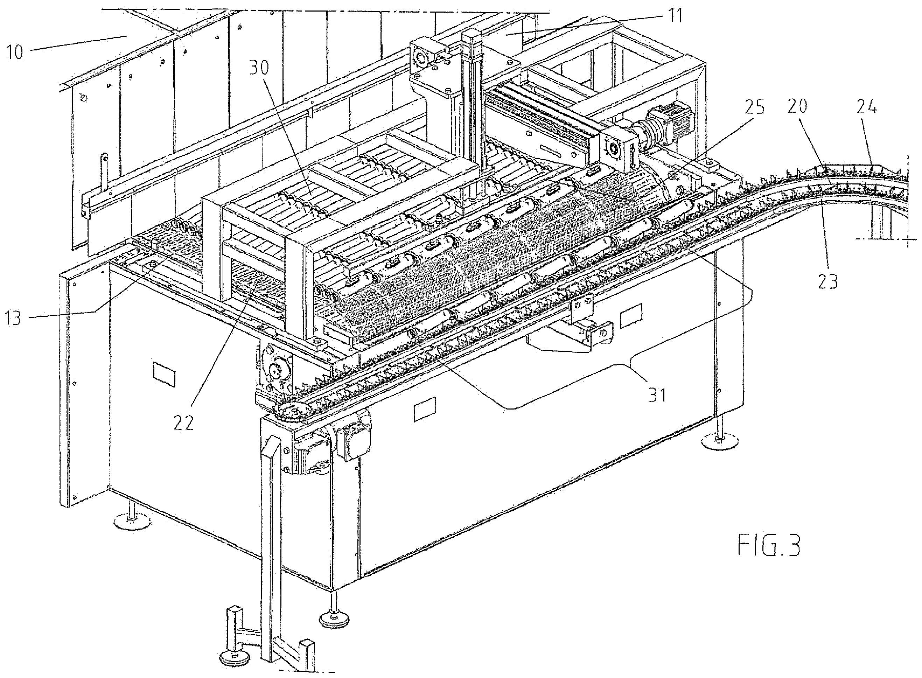

Die Fig. 2 und 3 zeigen den Ablagetisch 22 sowie das Transportband 20. Auf dem Ablagetisch 22 sind mehrere Beladereihen 31 von Glaswaren 30 angeordnet, die mittels des Transportsystems 13 in den Entspannungsofen 10 hinein- und durch diesen hindurchgeführt werden. Das Transportsystem 13 ist als umlaufendes Band 15 mit Laufrichtung 14 ausgeführt. Man erkennt, dass das Ablagesystem, welches als Vakuumgreifer 25 ausgeführt ist, eine Beladereihe 31 auf die Mitte 17 der dargestellten Umlenkrolle 16 des Transportsystems 13 absetzt. Hierdurch sind die Fahrwege, die das Ablagesystem vollführen muss, sehr kurz, da das Transportband 20 die Beladereihe 31 direkt vor dem Transportsystem 13 platziert und zwar schon in der richtigen Ausrichtung. Es muss also kein weiteres Verschwenken der Glaswaren 30 erfolgen. Der Fahrweg des Ablagesystems, welches hier als Vakuumgreifer 25 ausgeführt ist, ist sehr kurz.

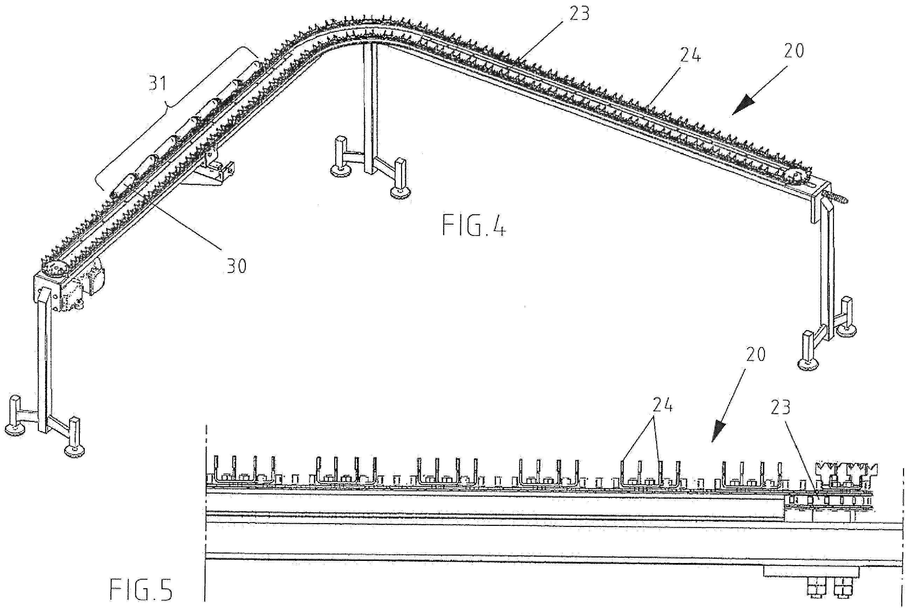

Die Fig. 4 bis 7 zeigen nochmals das erfindungsgemäße Transportband 20 im Detail. Hierbei handelt es sich um ein Kettenförderband 23, welches eine 90°-Kurve vollführt und somit die Glaswaren 30 in die richtige Position und die richtige Ausrichtung bringt. In Fig. 4 ist hierbei exemplarisch eine Beladereihe 31 dargestellt. Im Normalbetrieb kann das dargestellte Transportband 20 natürlich vollständig mit Glaswaren 30 bestückt sein.

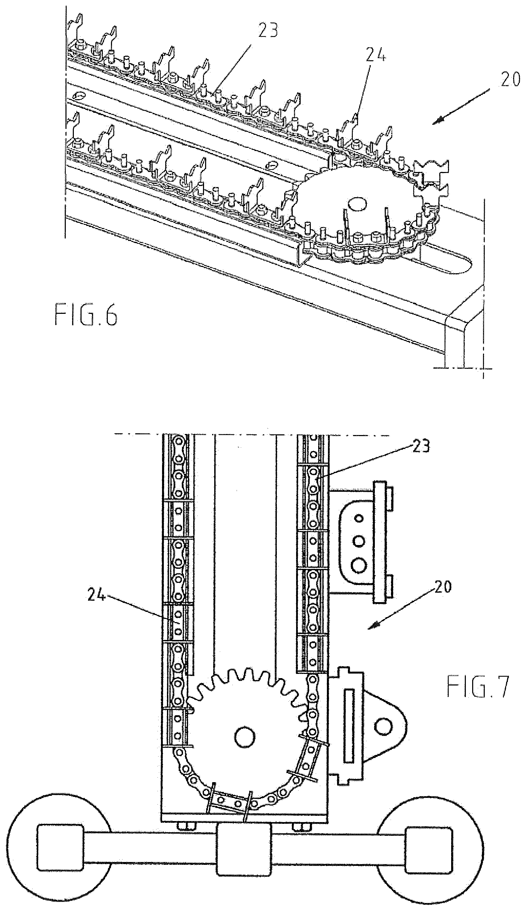

Des Weiteren erkennt man, dass das Kettenförderband 23 Tragelemente 24 aufweist. Auf jeweils einem Tragelement 24 ist dann eine Glasware 30 angeordnet. Insbesondere aus den Detailansichten in Fig. 5 und 6 erkennt man, dass die Tragelemente 24 durch einfaches Verschrauben am Kettenförderband 23 angeordnet und so hier lösbar befestigt sind. Hieraus ist auch ersichtlich, dass auch mehr Tragelemente 24 oder unterschiedlich geformte Tragelemente 24 auf einfache Art und Weise am Kettenförderband 23 angebracht werden können. Es ist auch einfach, die Tragelemente 24 zu entfernen bzw. zu ersetzen. Auch die Positionierung kann noch variieren, so dass geringere oder größere Abstände zwischen einzelnen Tragelementen 24 herstellbar sind.

Das erfindungsgemäße System ist einfach einsetzbar und kann auch bei bestehenden Vorrichtungen und Produktionsstraßen nachgerüstet werden. Hier müssen dann nur die Transportbänder und Aufnahme- bzw. Ablagesysteme ausgetauscht werden.

### Bezugszeichenliste:

- 10: Entspannungsofen
- 11: Anfang von 10
- 12: Ende von 10
- 13: Transportsystem
- 14: Laufrichtung von 13
- 15: Umlaufendes Band
- 16: Umlenkrolle
- 17: Mitte von 16
- 20: Transportband
- 21: Aufnahmesystem
- 22: Ablagesystem
- 23: Kettenförderband
- 24: Tragelement
- 25: Vakuumgreifer
- 30: Glasware
- 31: Beladereihe

## Patentansprüche

1. Vorrichtung zum positionsgetreuen Transport von empfindlichen filigranen heißen Glaswaren (30) zu einem Entspannungsofen (10) hin und von diesem weg,
mit wenigstens einem Transportband (20), auf welchem die Glaswaren (30) zum Entspannungsofen (10) hin und von diesem weg transportierbar sind,
wobei ein Transportsystem (13) durch den Entspannungsofen (10) verläuft, auf welchem die heißen Glaswaren (30) durch den Entspannungsofen (10) führbar sind
und mit einem Ablagesystem (22), durch welches mehrere Glaswaren (30) gleichzeitig von dem Transportband (20) auf das Transportsystem (13) und mit einem Aufnahmesystem (21), durch welches mehrere Glaswaren (30) gleichzeitig vom Transportsystem (13) auf das Transportband (20) bringbar sind,
**dadurch gekennzeichnet,**
**dass** die empfindlichen Glaswaren liegend transportiert werden,
**dass** das wenigstens eine Transportband (20) zumindest bereichsweise quer zur Laufrichtung (14) des Transportsystems (13) des Entspannungsofens (10) verläuft,
**dass** durch das Ablagesystem auf einem Ablagetisch (22) mehrere Glaswaren (30) in wenigstens einer Beladereihe (31), die sich senkrecht zu der Laufrichtung (14) des Transportsystems (13) erstreckt auf das Transportsystem (13) am Anfang (11) des Entspannungsofens (10) ablegbar sind und durch das Aufnahmesystem von einem Aufnahmetisch (21) mehrere Glaswaren (30) in wenigstens einer Beladereihe (31), die sich senkrecht zu der Laufrichtung (14) des Transportsystems (13) erstreckt am Ende (12) des Entspannungsofens (10) von diesem aufnehmbar sind und dass das Aufnehmen der Glaswaren (30) durch das Aufnahmesystem und das Ablagesystem mittels eines oder mehrerer Vakuumgreifer (25) erfolgt.

2. Vorrichtung nach Anspruch 1, **dadurch gekennzeichnet, dass** das Transportsystem (13) aus einem umlaufenden Band (15) mit wenigstens zwei Umlenkrollen (16) besteht und dass die mehreren Glaswaren (30) am Anfang (11) des Entspannungsofens (10) auf Höhe der Mitte (17) der vorderen Umlenkrolle (16) ablegbar und/oder am Ende (12) des Entspannungsofens (10) auf Höhe der Mitte (17) der hinteren Umlenkrolle (16) aufnehmbar sind.

3. Vorrichtung nach einem der Ansprüche 1 oder 2, **dadurch gekennzeichnet, dass** mehrere Beladereihen (31) von Glaswaren (30) gleichzeitig auf dem Ablagetisch (22) ablegbar und/oder von dem Aufnahmetisch (21) aufnehmbar sind.

4. Vorrichtung nach einem der Ansprüche 1 bis 3, **dadurch gekennzeichnet, dass** das wenigstens eine Transportband (20) als umlaufendes Kettenförderband (23) ausgebildet ist.

5. Vorrichtung nach einem der Ansprüche 1 bis 4, **dadurch gekennzeichnet, dass** durch das wenigstens eine Transportband (20) die Transportrichtung der Glaswaren (30) um 90° verschwenkbar ist.

6. Vorrichtung nach einem der Ansprüche 1 bis 5, **dadurch gekennzeichnet, dass** das wenigstens eine Transportband (20) ein oder mehrere Tragelemente (24) zur Aufnahme und zum Transport der Glaswaren (30) umfasst, wobei die Tragelemente (24) so beschaffen sind, dass eine minimale Kontaktfläche zwischen Tragelement (24) und Glasware (30) entsteht.

7. Vorrichtung nach Anspruch 6, **dadurch gekennzeichnet, dass** die Tragelemente (24) am Transportband (20) lösbar befestigbar sind.

8. Vorrichtung nach einem der Ansprüche 6 oder 7, **dadurch gekennzeichnet, dass** die Tragelemente (24) am Transportband (20) in unterschiedlichen Positionen und/oder Abständen positionierbar sind.

9. Vorrichtung nach einem der Ansprüche 1 bis 8, **dadurch gekennzeichnet, dass** das Aufnahmesystem und/oder das Ablagesystem über mehrere voneinander unabhängige Verfahrachsen verfügt.

## Claims

1. Device for the positionally accurate transport of delicate filigree hot glassware (30) to and from a stress-relieving furnace (10),
with at least one conveyor belt (20) on which the glassware (30) can be transported towards the flash furnace (10) and away from the latter,
wherein a transport system (13) runs through the stress-relieving furnace (10), on which the hot glassware (30) can be guided through the stress-relieving furnace (10)
and with a depositing system (22) by which a plurality of glassware (30) can be simultaneously transferred from the conveyor belt (20) onto the transport system (13) and with a receiving system (21) by which a plurality of glassware (30) can be simultaneously transferred from the transport system (13) onto the conveyor belt (20),
**characterised in that**
the sensitive glassware is transported lying down,
at least one conveyor belt (20) extends at least in regions transverse to the running direction (14) of the transport system (13) of the stress-relieving furnace (10),
a plurality of glassware (30) in at least one loading row (31) extending perpendicularly to the direction of travel (14) of the transport system (13) can be deposited by the depositing system on a depositing table (22) onto the transport system (13) at the start (11) of the stress-relieving furnace (10), and a plurality of glassware (30) in at least one loading row (31) can be deposited by the receiving system from a receiving table (21), which extends perpendicular to the direction of travel (14) of the transport system (13) at the end (12) of the stress relieving furnace (10) can be received by the latter
and that the glassware (30) is picked up by the receiving system and the depositing system by means of one or more vacuum grippers (25).

2. Device according to claim 1, **characterised in that** the transport system (13) consists of a circulating belt (15) with at least two deflection rollers (16) and that the several glassware units (30) can be deposited at the beginning (11) of the stress-relieving furnace (10) at the level of the centre (17) of the front deflection roller (16) and/or can be received at the end (12) of the stress-relieving furnace (10) at the level of the centre (17) of the rear deflection roller (16).

3. Device according to one of claims 1 or 2, **characterised in that** several loading rows (31) of glassware (30) can be deposited simultaneously on the depositing table (22) and/or can be received by the receiving table (21).

4. Device according to one of claims 1 to 3, **characterised in that** the at least one conveyor belt (20) is designed as a circulating chain conveyor belt (23).

5. Device according to one of claims 1 to 4, **characterised in that** the transport direction of the glassware (30) can be pivoted by 90° by at least one of the conveyor belts (20).

6. Device according to one of claims 1 to 5, **characterised in that** the at least one conveyor belt (20) comprises one or more support elements (24) for receiving and transporting the glassware (30), wherein the support elements (24) are designed in such a way that a minimum contact area between support element (24) and glassware (30) is created.

7. Device according to claim 6, **characterised in that** the supporting elements (24) can be fastened detachably to the conveyor belt (20).

8. Device according to one of claims 6 or 7, **characterised in that** the supporting elements (24) on the conveyor belt (20) can be positioned in different positions and/or distances.

9. Device according to any one of claims 1 to 8, **characterised in that** the receiving system and/or the depositing system has several independent travel axes.

## Revendications

1. Dispositif de transport, de la verrerie chaude (30) filigranée fragile, respectueux de sa position, jusqu'à un four de détensionnement (10) et/ou depuis ledit four, comprenant au moins un tapis transporteur (20) sur lequel les verreries (30) peuvent être transportées vers le four de détensionnement (10) et au départ de celui-ci,
sachant qu'un système de transport (13) traverse le four de détensionnement (10), système sur lequel les verreries chaudes (30) peuvent être guidées durant leur traversée du four de détensionnement (10)
et comprenant un système de déposition (22) moyennant lequel plusieurs verreries (30) peuvent être transférées simultanément du tapis transporteur (20) sur le système de transport (13), et comprenant un système réceptacle (21) moyennant lequel plusieurs verreries (30) peuvent être transférées simultanément du système de transport (13) sur le tapis transporteur (20),
**caractérisé en ce que**
la verrerie fragile est transportée couchée,
au moins un tapis transporteur (20) circule au moins localement transversalement au sens de circulation (14) du système de transport (13) du four de détensionnement (10),
au moyen du système de déposition sur une table de déposition (22), plusieurs verreries (30) peuvent être déposées sur au moins un rang de chargement (31) - qui s'étend verticalement par rapport au sens de circulation (14) du système de transport (13) - sur le système de transport (13) au début (11) du four de détensionnement (10), et qu'au moyen du système réceptacle plusieurs verreries (30) sur au moins un rang de chargement (31) - qui s'étend verticalement par rapport au sens de circulation (14) du système de transport (13) - peuvent être prises en charge par une table (21) réceptacle à l'extrémité (12) du four de détensionnement (10),
et **en ce que** la réception des verreries (30) est effectuée par le système réceptacle et le système de déposition au moyen d'un ou plusieurs préhenseurs sous vide (25).

2. Dispositif selon la revendication 1, **caractérisé en ce que** le système de transport (13) se compose d'un tapis (15) circulant en circuit fermé et composé d'au moins deux rouleaux de renvoi (16), et **en ce que** plusieurs verreries (30) peuvent être déposées au début (11) du four de détensionnement (10) à hauteur du milieu (17) du rouleau de renvoi avant (16) et/ou à la fin (12) du four de détensionnement (10) à hauteur du milieu (17) du rouleau de renvoi arrière (16).

3. Dispositif selon la revendication 1 ou 2, **caractérisé en ce que** plusieurs rangs de chargement (31) de verreries (30) peuvent être déposés simultanément sur la table de déposition (22) et/ou peuvent être priss en charge simultanément depuis la table réceptacle (21).

4. Dispositif selon l'une des revendications 1 à 3, **caractérisé en ce qu'**au moins un tapis transporteur (20) est configuré comme tapis convoyeur à chaînes (23) circulant en circuit fermé.

5. Dispositif selon l'une des revendications 1 à 4, **caractérisé en ce que** du fait au moins du tapis transporteur (20), la direction de transport des verreries (30) peut pivoter à 90°.

6. Dispositif selon l'une des revendications 1 à 5, **caractérisé en ce qu'**au moins un tapis transporteur (20) comprend un ou plusieurs éléments porteurs (24) servant à recevoir et transporter les verreries (30), sachant que les éléments porteurs (24) sont configurés de sorte à engendrer une surface de contact minimale entre l'élément porteur (24) et la verrerie (30).

7. Dispositif selon la revendication 6, **caractérisé en ce que** les éléments porteurs (24) sont fixés de manière détachable contre le tapis transporteur (20).

8. Dispositif selon la revendication 6 ou 7, **caractérisé en ce que** les éléments porteurs (24) peuvent être placés différemment positionnés et/ou espacés sur le tapis transporteur (20).

9. Dispositif selon l'une des revendications 1 à 8, **caractérisé en ce que** le système réceptacle et/ou le système de déposition disposent de plusieurs axes de translation indépendants les uns des autres.
